## Europäisches Patentamt

## European Patent Office

## Office européen des brevets

(19)

(11) Veröffentlichungsnummer: **0 446 390 A1**

(12) **EUROPÄISCHE PATENTANMELDUNG**

(21) Anmeldenummer: **90104769.6**

(22) Anmeldetag: **14.03.90**

(51) Int. Cl.⁵: **B29C 65/18, E02D 19/18**

(43) Veröffentlichungstag der Anmeldung:
**18.09.91 Patentblatt 91/38**

(84) Benannte Vertragsstaaten:
**AT BE CH DE DK ES FR GB GR IT LI NL SE**

(71) Anmelder: **HÜLS TROISDORF
AKTIENGESELLSCHAFT
Postfach 11 65
W-5210 Troisdorf(DE)**

Anmelder: **SOLETANCHE
6, rue de Watford
F-92005 Nanterre(FR)**

(72) Erfinder: **Schlütter, Aloys
Rheinstrasse 42
W-4152 Kempen 3(DE)**
Erfinder: **Evers, Gérard
12, Rue du Chène
F-78121 Chrespieres(FR)**
Erfinder: **Kaewert, Klaus
Gänsestrasse 4
W-4000 Düsseldorf 13(DE)**

(74) Vertreter: **Kaewert, Klaus, Rechtsanwalt
Huyssenallee 85
W-4300 Essen 1(DE)**

(54) **Schweissen von Kunststoffdichtungsbahnen in Erdschlitzen.**

(57) Nach der Erfindung erfolgt eine Verbindung von überlappend in Erdschlitze eingezogene Kunststoffabdichtungsbahnen dadurch, daß zwischen den überlappenden Bahnenrändern eine Heizpatrone durchgezogen wird.

EP 0 446 390 A1

22    20

22    21

FIG. 3

Die Erfindung betrifft ein Verfahren zum Schweißen von Abdichtungsbahnen in Erdschlitzen, wobei eine Heizpatrone durch den Dichtspalt zwischen den beiden Rändern durchgezogen wird.

Erdschlitze mit Kunststoffabdichtungsbahnen sind eine begehrte Abdichtungsmethode für kontaminierte Standorte wie Deponien. Bei derartigen kontaminierte Standorten kommt es darauf an, eine Umweltgefahr durch austretende Sickerwässer bzw. eintretendes Grundwasser zu verhindern. Die Vergiftungsgefahren sind dabei häufig so extrem, daß eine früher übliche Abdichtung mit einfachen, bentonitgefüllten Schlitzwänden unzureichend ist. In diesen Fällen werden Kunststoffabdichtungsbahnenzusätzlich in den bentonitgefüllten Erdschlitz eingebracht. Die Kunststoffabdichtungsbahnen verhindern einen Durchtritt der Kontaminationsstoffe. Allerdings stellt sich das Problem der Verbindung der Kunststoffabdichtungsbahnen an den Bahnenrändern. Eine gängige Technik sieht Profile vor, die nach Art von Nut-/Federverbindungen ineinandergeschoben werden. Allein diese mechanische Verbindung ist noch keine ausreichende Abdichtung, wenn es gilt, Kontaminationsstoffe zu hemmen.

Es sind deshalb vielfältige Überlegungen angestellt worden, um durch Verschweißen der Kunststoffabdichtungsbahnen eine wirklich dichte Verbindung herzustellen. Einer der Vorschläge zum Verschweißen geht davon aus, daß durch die Profile eine Schweißpatrone durchgezogen wird. Die Profile sind an den Bahnenrändern vorgesehen, werden ineinandergeschoben und bilden eine mechanische Verbindung. Die Schweißpatrone wird durch den Dichtspalt gezogen, der entsprechend gestaltet wird. Dabei plastifiziert die Schweißpatrone das angrenzende Material der Profile bis zu einer bestimmten Tiefe. Sogleich findet eine Verformungsarbeit statt. Die Verformungsarbeit kann ein- oder mehrstufig erfolgen, desgleichen der Plastifizierungsvorgang. Im Ergebnis wird eine dichte Schweißverbindung erzeugt.

Die ältere Schweißtechnik hat jedoch einen wesentlichen Nachteil. Der Nachteil ist weniger dem Schweißen, als den Profilen an den Bahnenrändern zuzuschreiben. Die Profile sind nämlich bislang insgesamt teurer als die Kunststoffabdichtungsbahnen selbst. Dabei kommt zum Tragen, daß die Kunststoffabdichtungsbahnen aus Gründen der Schlitzwandtechnik nur eine relativ geringe Breite haben können.

Der Erfindung liegt die Aufgabe zugrunde, die Wirtschaftlichkeit des Schweißvorganges zu verwässern. Dabei löst sich die Erfindung von den Profilen. Nach der Erfindung ist ein Verschweißen ohne die üblichen Profile gemäß den Merkmalen des Anspruches 1 vorgesehen. Dabei löst sich die Erfindung von der Vorstellung, daß zur Führung der Heizpatrone eine mechanische Verbindung der Bahnenränder bereits bestehen muß. Die Erfindung hat erkannt, daß es ausreichend ist, lose aufeinanderliegende Bahnenränder gegeneinander zu drükken. Der dazu erforderliche Druck kann z. B. in der Weise erzeugt werden, daß im Nahtbereich ein mit Flüssigkeit gefüllter Schlauch vorgesehen ist, welcher unter Druck gesetzt wird, sich auswölbt und dadurch die überlappenden Bahnenränder gegeneinander drückt. Dabei kann sich der Schlauch einerseits am Schlitzwandrand, andererseits an einer Widerlagerfläche der zum Einziehen der Kunststoffabdichtungsbahnen vorgesehenen Vorrichtung abstützen. Den notwendigen Gegendruck (Widerlagerdruck) an den Abdichtungsbahnenrändern kann ein weiterer Schlauch erzeugen, der dem erstgenannten Schlauch gleich und an der gegenüberliegenden Seite der Bahnenränder angeordnet ist. Der Druck kann aber auch mit Hilfe einer geeigneten Fläche an der zum Einziehen der Kunststoffabdichtungsbahnen vorgesehenen Vorrichtung erzeugt werden.

Die Schläuche können sich an den Seitenwänden des Erdschlitzes oder aber auch an geeigneten Flächen der Bahnen vorgesehenen Vorrichtung abstützen.

Die Heizpatrone wird nach der Erfindung zwischen den gegeneinander gedrückten Bahnenrändern durchgezogen. Von Vorteil ist dabei, wenn die üblicherweise recht dünnen Abdichtungsbahnen im Berührungsbereich mit der Heizpatrone eine Materialverdickung besitzen. Diese Materialverdickung kann in einfacher Weise durch Aufschweißen eines Bahnenstreifens erreicht werden. Bei umfangreicher Fertigung solcher Kunststoffabdichtungsbahnen kann der Material streifen während des Herstellungsvorganges der Kunststoffabdichtungsbahnen zugefahren werden. Eine geeignete Stelle befindet sich unmittelbar hinter dem die Kunststoffabdichtungsbahnen aus dem Extruder aufnehmenden und formgebenden Kalander. Dort ist das Material noch plastisch, so daß ein an der Berührungsfläche mit der Kunststoffabdichtungsbahn gleichfalls plastifizierter Materialstreifen durch bloßes Andrücken an den Kunststoffabdichtungsbahn mit dieser verschweißt wird.

Von Vorteil ist es, wenn jeder Überlappungsrand mit einem Materialstreifen versehen wird und die Bahnenränder so zur Überlappung gebracht werden, daß die Materialstreifen im Bewegungsbereich der Heizpatrone liegen.

In weiterer Ausbildung der Erfindung wird ein Material streifen wahlweise zugleich zur Führung der Heizpatrone benutzt. Das kann mit Hilfe einer rillenförmigen Vertiefung in den Materialstreifen erreicht werden.

In der Zeichnung ist ein Ausführungsbeispiel der Erfindung dargestellt.

Mit 1 und 2 sind zwei Kunststoffabdichtungsbahnen bezeichnet, die in einen Erdschlitz eingezogen worden sind. Der Erdschlitz ist mit Bentonit 3 verfüllt.

Der Erdschlitz ist duch Fräsen oder in sonstiger Weise entstanden. Beim Ausheben des Erdschlitzes ist die Bentonitsuspension 3 eingefüllt worden. Die Bentonitsuspension hat dabei in erster Linie die Aufgabe, die entstehenden Schlitzwände abzustützen.

Die Kunststoffabdichtungsbahnen 1 und 2 bewirken die eigentliche Abdichtung im Erdschlitz. Sie bestehen aus einem Thermoplast, z. B. Ethylencopolymerisat-Bitumen-Gemisch, oder aus HDPE, einem Polyethylen großer Dichte.

Die Kunststoffabdichtungsbahnen 1 und 2 werden mit Hilfe von zwei Vorrichtungen eingezogen. Bei den Vorrichtungen handelt es sich um Blechkonstruktionen, von denen Teile 4 und 5 dargestellt sind. Die Kunststoffabdichtungsbahnen werden vor dem Einziehen auf den Blechkonstruktionen geklammert oder mit Magnetkraft gehalten oder in sonstiger Weise lösbar zum Halten gebracht. In diese Anordnung werden die Kunststoffabdichtungsbahnen mit den Blechkonstruktionen in die Bentonitsuspension 3 abgesenkt. Aufgrund ihrer Stabilität lassen sich die Blechkonstruktionen millimetergenau steuern. Die Blechkonstruktionen sinken mitsamt den Abdichtungsbahnen aufgrund ihres Gewichtes bereits in der gewünschten Weise in der Suspension ab.

Im Überlappungsbereich ist die Kunststoffabdichtungsbahn 2 mit einem Materialstreifen 6 und die Kunststoffabdichtungsbahn 1 mit einem Material streifen 7 versehen.

Die Materialstreifen 7 und 6 bestehen aus dem gleichen Material wie die Kunststoffabdichtungsbahnen 1 und 2. Sie sind mit den Abdichtungsbahnen 1 und 2 vorzugsweise vollflächig verschweißt.

Der Materialstreifen 6 besitzt eine Dicke von 8 mm, der Materialstreifen 7 eine Dicke von 3 mm, die Kunststoffabdichtungsbahnen 1 und 2 desgleichen eine Dicke von 3 mm.

In dem Material streifen 6 ist eine Ausnehmung 8 vorgesehen. Die Ausnehmung 8 hat einen quadratförmigen Querschnitt mit einer Kantenlänge von etwa 7,5 mm.

Die Materialstreifen 6 und 7 bzw. die Kunststoffabdichtungsbahnen 1 und 2 werden in der gezeichneten Form mit Hilfe eines Schlauches 9 gegeneinander gedrückt. Der Schlauch hat eine Bentonitfüllung 10 und ist am Teil 4 befestigt. Mit der gegenüberliegenden Seite drückt er auf den Rand der Kunststoffabdichtungsbahn 1, so daß der Materialstreifen 7 gegen den Materialstreifen 6 und der Rand der Kunststoffabdichtungsbahn 2 gegen den Teil 5 gedrückt wird. Zum Aufbau eines Druckes ist der Schlauch oben und unten verschließbar und zusätzlich mit Druck belastbar.

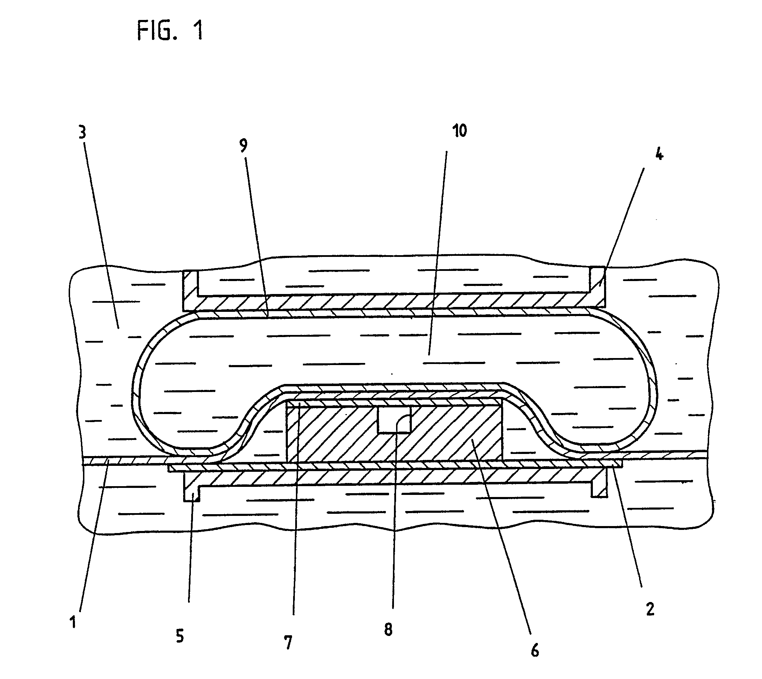

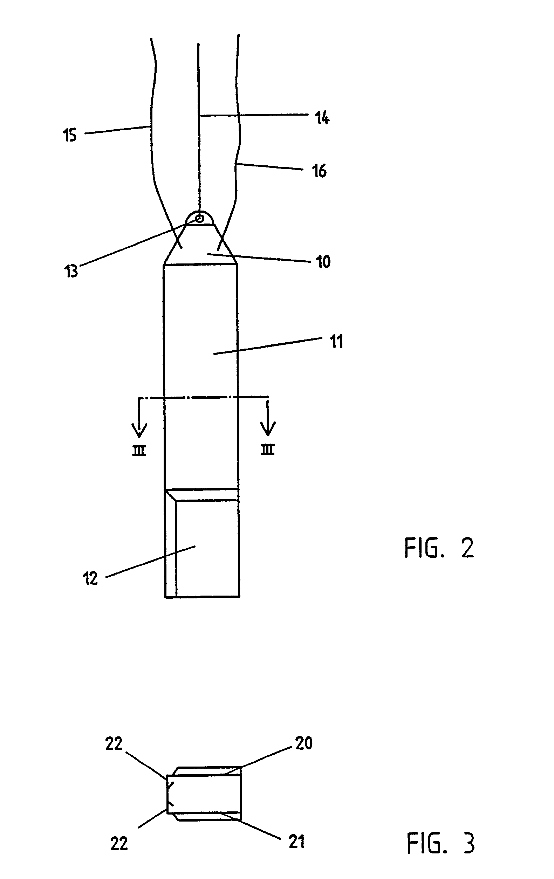

In der dargestellten Situation wird eine Heizpatrone durch die Ausnehmung 8 gezogen. Die Heizpatrone ist in Fig. 2 und 3 dargestellt. Es handelt sich um einen länglichen Körper, der mit einer Zentrierspitze 10, einem ersten Heiz- und Verformungsteil 11 und einem zweiten Heiz- und Verformungsteil 12 versehen ist. An der Zentrierspitze 10 befindet sich eine Öse 13 für die Anlenkung eines Zugseiles 14. Die Leitungen 15 und 16 bezeichnen Stromzuführungs- und Steuerungskabel für eine in der Patrone vorgesehene elektrische Beheizung.

Im ersten Heiz- und Verformungsteil 11 hat die Heizpatrone einen quadratischen Querschnitt mit einer Kantenlänge von 8 mm.

Im zweiten Heiz- und Verformungsteil 12 erweitert sich der Querschnitt an zwei gegenüberliegenden Seiten 20 und 21 um jeweils 0,25 mm. Zugleich sind die Kanten bei 22 und 23 abgeschrägt. Die Abschrägung erfolgt unter 45°. Die Querschnittsfläche der Abschrägung entspricht der Verdickungsfläche bei 20 und 21, wobei zweckmäßigerweise der Querschnitt der Abschrägungen geringfügig kleiner als der Querschnitt der Verdickungen bei 20 und 21 gewählt worden ist.

Die Heizpatrone wird vom Einziehen der Abdichtungsbahn 1 im Materialstreifen 6, in der Ausnehmung 8 angeordnet. Das kann in einfacher Weise dadurch erfolgen, daß die Heizpatrone heiß in die Ausnehmung 8 gedrückt wird. Danach haftet die Heizpatrone in der Ausnehmung 8.

Die Heizpatrone wird am unteren Ende der Kunststoffabdichtungsbahn 1 bzw. des Materialstreifens 6 angeordnet. Nach Einziehen beider Kunststoffabdichtungsbahnen 1 und 2 und Drukkaufbau in dem Schlauch 9, d. h. Anpressen der Abdichtungsbahnenränder, wird die Heizpatrone mit Strom beaufschlagt und auf die vorgesehene Betriebstemperatur erwärmt. Anschließend kann die Heizpatrone nach oben gezogen werden. Dabei werden die Vorschubgeschwindigkeit und die Beheizungstemperatur aufeinander abgestimmt. Der Vorschub erfolgt im Ausführungsbeispiel mit einer vorgewählten Zugkraft. Daraus ergibt sich bei der Heiztemperatur die Vorschubgeschwindigkeit.

Die Heizpatrone ist so in der Ausnehmung 8 angeordnet, daß die Abschrägungen 22 und 23 gegen den Materialstreifen 7 zeigen.

Bei ausreichender Betriebstemperatur der Heizpatrone bewirkt deren Vorschubbewegung ein Aufschmelzen der Materialstreifen 6 und 7 an deren Berührungsflächen mit der Heizpatrone. Es entsteht ein Stopfen, der der Zentrierspitze vorwegläuft und die im Schlitz 8 befindliche Bentonitsuspension vor der Heizpatrone wegdrückt. Die Bentonitsuspension läuft oben aus dem Schlitz 8 heraus.

Das durch die Querschnittserweiterung bei 20 und 21 darüber hinaus plastifizierte Material wird in den Bereich der Abschrägungen 22 und 23 geschoben und bildet dort Stege, die die Material streifen 6 und 7 miteinander dicht verbinden.

## Patentansprüche

1. Verfahren zum Verschweißen von Kunststoffabdichtungsbahnen ind Erdschlitzen, wobei eine Heizpatrone durch den Dichtspalt zwischen den Bahnenrändern durchgezogen wird, dadurch gekennzeichnet, daß die Bahnenränder überlappend in die Erdschlitze eingezogen werden, die Überlappungsränder von außen gegeneinander gepreßt werden und die Heizpatrone zwischen den Überlappungsrändern durchgezogen wird.

2. Vorrichtung zur Durchführung des Verfahrens nach Anspruch 1, gekennzeichnet durch Materialstreifen (6) mit einem Führungskanal (8).

3. Vorrichtung nach Anspruch 2, gekennzeichnet durch rechteckförmigen Kanalquerschnitt.

4. Vorrichtung nach Anspruch 2 oder 3, gekennzeichnet durch mindestens einen Andrückschlauch (9).

5. Vorrichtung nach Anspruch 4, dadurch gekennzeichnet, daß zwei Vorrichtungen zum Einziehen von Abdichtungsbahnen verwendet werden und der Ansrückschlauch in einer der Vorrichtungen angeordnet ist und die Abdichtungsbahnenränder gegen die andere Vorrichtung drückt.

FIG. 1

FIG. 2

FIG. 3

**Europäisches Patentamt**

# EUROPÄISCHER RECHERCHENBERICHT

Nummer der Anmeldung

## EP 90 10 4769

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 283 770 (NIEDERBERG-CHEMIE GmbH) <br> * Spalte 12, Zeilen 19-53; Figuren 11,12 * <br> - - - | 1,4 | B 29 C 65/18 <br> E 02 D 19/18 |
| Y | EP-A-0 166 857 (NIEDERBERG-CHEMIE) <br> * Seite 4, Zeile 20 - Seite 5, Zeile 7; Fig. * <br> - - - | 1,4 | |
| A | EP-A-0 339 181 (NIEDERBERG-CHEMIE) <br> * Ganzes Dokument * <br> - - - - - | 1 | |

RECHERCHIERTE
SACHGEBIETE (Int. Cl.5)

B 29 C
E 02 D

Der vorliegende Recherchenbericht wurde für alle Patentansprüche erstellt

| Recherchenort | Abschlußdatum der Recherche | Prüfer |
|---|---|---|
| Den Haag | 09 November 90 | TOPALIDIS A. |